# EUROPEAN PATENT APPLICATION

(11) **EP 3 366 555 A1**
(43) Date of publication of application: **29.08.2018**
(21) Application number: 18158108.3
(22) Date of filing: 22.02.2018
(51) Int. Cl.: B62J 1/28, B62J 15/02, B62J 1/08

(54) **SPLASH GUARD**

(30) Priority: 24.02.2017 SE 1750201
(71) Applicant: Ass Savers AB, 411 04 Göteborg (SE)
(72) Inventor: Danielson, Petter, 421 59 Västra Frölunda (SE)
(74) Representative: Valea AB

(57) **Abstract**

The present disclosure relates to a self-supporting rear splash guard (22) for a bicycle, the bicycle having a seat arrangement (2) comprising a seat (4), a pair of seat rails (10, 12) and a seat post (8), the seat (4) being connectable to the seat post (8) by means of the support system (6). The splash guard comprises a front portion (24), a central portion (26) and a rear portion (28). The splash guard is adapted to extend over the seat post, when the splash guard is mounted in the seat arrangement, whereby the front portion of the splash guard is adapted to be bent downwards to pass down through the pair of seat rails, when the splash guard is mounted in the seat arrangement. The front portion of the splash guard comprises a first fold line (132) at least partly, preferably completely, delimiting a tip portion from the rest of the front portion, such that the tip portion is located in front of the first fold line. The first fold line is curved in a forward direction, preferably having a shape of a V with a rounded apex or an arcuate shape. The tip portion is adapted to be folded at the first fold line from below upwards towards the pair of seat rails in front of the seat post, when the splash guard is mounted in the seat arrangement. The disclosure further relates to a method for mounting a splash guard to a seat arrangement of a bicycle.

## Description

### TECHNICAL FIELD

The present disclosure relates to a self-supporting rear splash guard for a bicycle. The disclosure further relates to a method for mounting a splash guard to a seat arrangement of a bicycle.

### BACKGROUND

When using a bicycle on a road, bike path or in the terrain, dirt, mud and/or water from the ground may be thrown up from a rear tyre of the bicycle. Therefore, most standard bicycles have fixedly mounted fenders or mud guards around a portion of the tyre to reduce, or preferably to avoid, dirt, mud and/or water from reaching the user of the bicycle, e.g. his or her back.

However, some bicycles, typically sport bicycles, do not have such fenders. The reason may be to save weight and/or to improve aerodynamics. This may not cause any problems, when using the bicycle in good weather conditions. However, the user of the bicycle may get quite dirty and/or wet if there is dirt, mud and/or water present on the ground, which is thrown up by the rear tyre.

Document US 2003/0155736 discloses a rear splash guard for bicycles. It comprises a flat sheet of resilient material in finished form, which may be attached to a bicycle seat arrangement. The bicycle seat or seat support system will then hold the splash guard in tension behind the seat post, such that it is given a three-dimensional shape.

Document WO 2015/036127 A1 discloses a self-supporting rear splash guard, for which the front portion of the splash guard is adapted to extend over the seat post and to engage with the support system in front of the seat post, when the splash guard is mounted in the seat arrangement.

Document WO 2016/186433 A1 discloses a mudguard, which comprises a fixed panel and a fender panel. The fixed panel is formed in a strip shape intended to be inserted into the coupling portion between a seat post and a saddle of a bicycle.

### SUMMARY

The object of the present disclosure is to overcome or ameliorate at least one of the disadvantages of the prior art, or to provide a useful alternative.

It is desirable to provide a self-supporting rear splash guard for a bicycle.

It is further desirable that the splash guard has a light weight.

It also desirable to provide a splash guard which is easy to mount and/or dismount from the seat arrangement. In particular, it is desirable to provide a splash guard which may be mounted or dismounted without the use of any tools.

It is also desirable that the splash guard keeps its desired position when mounted, such that it does not become inclined or sloped.

In addition, it is desirable that the splash guard can be attached to the seat arrangement in a secure manner, thereby preventing the splash guard from risking falling off due to vibrations, shaking, involuntary interference, or other actions.

It is also desirable to provide a splash guard that gives the user easily understandable visual and/or audible feedback as to when the splash guard is properly mounted.

It is also desirable that a mounted splash guard does not have any protruding elements which might rub or scrape the rider, for example the inner thighs of a bicyclist.

Furthermore, it is desirable that the splash guard is able to fit a wide array of seat variants and/or seat post variants, including the larger seat rails common in seats comprising carbon fiber reinforced polymer.

One or more of the objects above may be achieved by the subject-matter of the independent claims. Embodiments are set forth in the appended dependent claims, in the following description and in the drawings.

Thus, in a first aspect of the present invention there is provided a self-supporting rear splash guard for a bicycle. The bicycle has a seat arrangement comprising a seat, a pair of seat rails and a seat post, the seat being connectable to the seat post by means of the seat rails. The splash guard has a longitudinal direction and a transverse direction. The splash guard comprises a front portion, a central portion and a rear portion. The splash guard is adapted to extend over the seat post, when the splash guard is mounted in the seat arrangement, whereby the front portion of the splash guard is adapted to be bent downwards to pass down through the pair of seat rails and preferably to engage with the pair of seat rails in front of the seat post, when the splash guard is mounted in the seat arrangement. The front portion of the splash guard comprises a first fold line at least partly, preferably completely, delimiting the tip portion from the rest of the front portion, such that the tip portion is located in front of the first fold line. The first fold line is curved in a forward direction, preferably having a shape of a V with a rounded apex or an arcuate shape. The tip portion is adapted to be folded at the first fold line from below upwards towards the pair of seat rails in front of the seat post, when the splash guard is mounted in the seat arrangement.

The term splash guard for a bicycle includes splash guards for bicycle-like vehicles, i.e. vehicles being similar to a bicycle. In particular such vehicles have a seat arrangement similar to that of a bicycle and a rear tyre, located behind the seat arrangement, which tyre may potentially throw dirt, mud and/or water present on the ground onto the user of the vehicle. Such vehicles include an e-bike, or electric bicycle, i.e. a bicycle comprising electric motor which can be used for propulsion, and a moped. The motor may be electric or driven by liquid or gaseous fuel and may be used as an alternative to, or in combination with, pedals.

A first seat rail is located at a left-hand side of the seat and a second seat rail at a right-hand side of the seat, wherein the left-hand side and right-hand side are defined from the point of view of a possible user sitting on the bicycle would have. The seat rails are comprised in or constitute a support system for the seat.

The seat post may comprise a cylindrical or tubular structure allowing height adjustment of the seat in relation to a frame of the bicycle. The seat post may further comprise an attachment unit for attachment of the seat to the seat post via the support system, e.g. by attachment of the seat rails to the attachment unit. The seat may be adjusted in the longitudinal direction relative to the seat post by selecting which portion of the seat rails is attached to the attachment unit. The seat rails may e.g. be slid through the attachment unit in order to reach the desired position. The attachment unit may comprise a lower portion connected to the tubular structure and an upper portion, which is connectable to the lower portion by means of an attachment means, e.g. a bolt and nut connection. Further, it is for many seat arrangements possible to change the angle between the seat and the seat post. However, the splash guard as described herein is also applicable for other kinds of seat arrangements.

When mounted in the seat arrangement of the bicycle, the longitudinal direction and the transverse direction of the splash guard may substantially coincide with the longitudinal and transverse direction of the bicycle.

The splash guard is adapted to extend over the seat post, when the splash guard is mounted in the seat arrangement. The front portion is then located above the seat post, e.g. above the attachment unit, but below the seat. Further, the front portion is adapted to extend in front of the seat post, and is adapted to pass down between the seat rails in front of the seat post, i.e. in front of the attachment unit, and preferably to engage with the seat rails in front of the seat post. The tip portion, which is located at the front end of the front portion i.e. at its tip, is adapted to be folded upwards from below the seat rails. Preferably, the tip portion is adapted to be folded upwards until it abuts the pair of seat rails. Thereby, the tip portion itself does not pass upwards through the seat rails. The front portion only passes the seat rails once, i.e. when it is bent downwards through the seat rails.

By allowing the tip portion to be folded towards the seat rails in front of the seat post, a strong, safe and stable connection to the seat arrangement is provided. This will for example help to keep the splash guard in a desired position relative to the seat arrangement, also when using the bicycle in rough terrain. This results in a secure attachment of the splash guard, thereby preventing it from risking falling off due to vibrations, shaking, involuntary interference, or other actions.

Preferably, the tip portion is adapted to be folded upwards until it abuts an underside of the pair of seat rails. This results in a strong, safe, stable and predefinable positioning of the splash guard.

The central portion of the splash guard is to be located behind the seat post of the bicycle. The central portion is adapted to extend between the rear side of the seat post, e.g. the rear side of the attachment unit comprised in the seat post, and a rear end of the seat.

The rear portion is adapted to extend in a rearward direction from the seat, such that the splash guard can catch dirt, mud and/or water thrown up from a rear tyre of the bicycle.

The terms front portion, central portion and rear portion are related to the positions the splash guard will have when the seat is positioned in an average longitudinal position relative to the seat post. As mentioned above, the seat may be adjusted in a longitudinal direction relative to the seat post. Thereby the delimitations of the portions will also be displaced in relation to the rear side of the seat post and the rear end of the seat in a similar way.

The splash guard is self-supporting. The rear portion is hence able to protrude in a rearward direction from the seat arrangement without having any support or attachment to the bicycle other than by the other portions of the splash guard being mounted in the seat arrangement.

The splash guard is easy to mount and dismount, for example by using the method below. The mounting or dismounting may be performed by hand. No tools are needed to mount or dismount the splash guard. Further, the mounting is safe, since the splash guard is provided with a safe and stable connection to the seat arrangement, such that the splash guard will not slip out of position or fall off.

When the splash guard is mounted in the seat arrangement, the front portion may have a surface, whereof at least portion is facing a front side of the seat post. The front portion may e.g. be bent and/or folded in the longitudinal direction, such that a portion of an underside of the front portion faces in a direction towards the front side of the seat post. The front portion may abut at least a portion of a front edge of the seat post and/or at a front side of the seat post. There may also be a gap between the front portion and the seat post. The front portion has an angled position in relation to the seat post. The angle may be between 0° and 90°, preferably between 10° and 80°, more preferably between 20° and 70°.

The front portion is adapted to pass through the pair of seat rails in front of the seat post, when the splash guard is mounted in the seat arrangement. Preferably, the seat rails thereby engage with the front portion. Hence, the seat rails may help to keep the front portion under lateral tension, which may be used to obtain a desired three-dimensional shape of the front portion. Passing through the seat rails also contributes to provide a safe mounting.

The tip portion, together with the rest of the front portion, may provide a visual confirmation for the user that the splash guard is correctly fitted to the seat rails, by means of providing two different distinctive states, one of the states being the mounted, folded and locked splashguard, the other state being the inserted, but yet unfolded and thus unlocked splash guard.

The tip portion, together with the rest of the front portion, may provide an audible confirmation of fitting as well as confirmation of release, by means of providing a clicking sound upon folding and unfolding the tip portion.

As mentioned above, the seat may be adjusted in the longitudinal direction relative to the seat post by selecting which portion of the seat rails is attached to the attachment unit. It may then occur that the front portion have to pass the seat rails in front of the seat post at a location wherein the distance between the seat rails is less than for an average longitudinal position of the seat. However, due to the foldable tip portion of the splash guard according to the invention, also such a splash guard will be securely attached to the seat arrangement.

As mentioned above, the front portion of the splash guard comprises a first fold line at least partly, preferably completely, delimiting the tip portion from the rest of the front portion, such that the tip portion is located in front of the first fold line. The first fold line is curved in a forward direction, preferably having a shape of a V with a rounded apex or an arcuate shape. By providing the first fold line, it is predefined at what location the front portion is to change direction to an upward direction.

The term fold line as used herein means that the splash guard is more prone to be folded along the fold line than at other locations. The fold line may be formed by a local compression in the material or by a local weakening of the material. The fold line may be continuous or it may comprise a series of short lines and/or dots.

The term fold line is not restricted to a straight line. As described below, a fold line may e.g. have a shape of a V with a rounded apex or an arcuate shape, such as for the first fold line. The shape may be any combinations of straight sections and/or curved sections.

The first fold line may extend from one lateral side of the front portion to the other, or over just a portion of the transverse width. The first fold line thus has a transverse extension. In addition, it has a longitudinal extension since it is curved in the forward direction. This helps to obtain the desired three-dimensional hook-like shape when attaching the splash guard to the seat arrangement.

The first fold line may have a shape of a V with a rounded apex or an arcuate shape. It is preferred to have a first fold line without a sharp tip, since a sharp tip may introduce a point where a fracture would be more likely to start, or it may introduce a local discolouring, e.g. if the splash guard is made of coloured plastics. If having the shape of a V with a rounded apex, the angle between one of the straight sections and a transversal direction is typically in the range of 10° to 45°, preferably in the range of 20° to 40°. The apex may have a radius of curvature in the range of 10 to 35 mm, preferably in the range of 20 to 30 mm.

The shape of the first fold line may be any combinations of straight sections and/or curved sections. The first fold line may also have other shapes, for example a segmented curve with sharp corners, as long as it helps to guide the shaping of the front portion of the splash guard, as the tip portion is folded when securing the splash guard to the seat arrangement. Preferably, the shape of the first fold line is symmetric in relation to a longitudinal centre line of the splash guard.

A longitudinal distance between the point of the first fold line being most forward, e.g. the apex, and a line through the points where the first fold line meets the lateral edges of the tip portion may be in the range of from 5 mm to 20 mm, preferably in the range of from 8 mm to 15 mm. A larger radius of apex will e.g. for a certain longitudinal distance result in a larger angle between one of the straight sections and a transversal direction.

The tip portion is adapted to be folded along the first fold line. This first fold line acts to help define the exact shape of the hook-like mounting system that the tip portion forms together with the rest of the front portion and in interaction with the seat rails of the seat arrangement. The location, size and shape of the attachment unit may also interact with the front portion of the mounted splash guard, helping to define the shape and mechanical function of the hook-like mounting system.

The front portion may, as a complement to the first fold line, have other means of guiding folding or bending of the tip portion, such as a ridge, knobs or some other local thickening or thinning of the material of the splash guard, helping to form the desired three-dimensional hook-like shape when attaching the splash guard to the seat arrangement.

The splash guard may comprise at least one second fold line, preferably a pair of second fold lines, extending substantially in the longitudinal direction of the splash guard at least in the central portion.

One, two, three or more second fold lines may be used. If using two, three, four or more second fold lines, they may extend substantially in the longitudinal direction of the splash guard at least in the central portion, preferably extending in parallel. The second fold line/s may extend, at least partly, also into the front portion and/or the rear portion. The second fold line/s will help to provide a desired three-dimensional shape, when the splash guard is mounted in the seat arrangement. The second fold line or lines may also result in an increased structural strength of the front portion, and of the splash guard as a whole.

It has been found appropriate to use two second fold lines extending in parallel substantially in the longitudinal direction of the splash guard at least in the central portion, since this provides the splash guard with a substantially flat upper surface of the central portion when mounted in the seat arrangement. The substantially flat upper surface will help to keep the splash guard in a stable position. In particular, the substantially flat upper surface helps to prevent rotation out of position when seen along a rotational axis going in the longitudinal direction of the splash guard.

The second fold line/s may comprise a front end and a rear end, whereof at least one of the ends is curved in a direction towards the longitudinal centre line of the splash guard. This will help to provide a desired three-dimensional shape, when the splash guard is mounted in the seat arrangement. Further, it is thereby avoided to risk introducing a point where a fracture would be more likely to start.

The splash guard may comprise a third fold line extending substantially in the longitudinal direction of the splash guard at least in the front portion, preferably extending along the longitudinal centre-line of the splash guard. The third fold line may extend partly into the central portion. The third fold line may be used to obtain the desired three-dimensional shape of the front portion, when mounted in the seat arrangement. If instead using two, three or more third fold lines in the front portion, they preferably extend in parallel.

A minimum distance from the front end of the third fold line to the first fold line is typically in the range of from 0 to 25 mm, preferably in the range of from 3 to 20 mm, more preferably in the range of from 5 to 15 mm.

The rear portion may comprise at least one fourth fold line extending substantially in the longitudinal direction of the splash guard, preferably along a longitudinal centre-line of the splash guard. If using two, three or more fourth fold lines in the rear portion, they preferably extend in parallel. The fourth fold line or lines may be used to obtain the desired three-dimensional shape of the rear portion, when mounted in the seat arrangement. The fourth fold line or lines may also result in an increased structural strength of the rear portion.

The splash guard may comprise at least one fifth fold line extending substantially in the transverse direction of the splash guard. Thereby, the splash guard may be folded double into halves and more easily fit inside a pocket or bag when not in use. By folding the splash guard, the sometimes wet or dirty underside may also be kept from staining the bag or pocket.

The position of the fifth fold line may be close to a thought line delimiting the central portion from the rear portion, and they may even coincide, such that the fifth fold line delimits the rear portion from the central portion. The fifth fold line may suitably be located at about half of the longitudinal length of the splash guard. It is also possible to use two fifth fold lines and fold the splash guard into three parts, and so forth.

In addition to the above-mentioned fold lines, there may also be one or more fold lines extending through both the rear and the central portion, e.g. parallel to the lateral edges of the splash guard.

The front portion of the splash guard may comprise at least one engaging means adapted to engage with the pair of seat rails in front of the seat post, when the splash guard is mounted in the seat arrangement. Preferably, there is at least one engaging means at each lateral side of the front portion. The engaging means may provide additional means for keeping the splash guard in position, even when the bicycle is used in rough terrain. However, also a splash guard without engaging means may be kept in place due to the lateral tension exerted to the front portion by the support system, e.g. by the seat rails. Further, the folded tip portion contributes to keeping the splash guard in place.

The engaging means may comprise at least one shoulder at a lateral side of the front portion of the splash guard, preferably at least one shoulder at each lateral side of the front portion, the front portion having a shoulder transverse width at a location of the shoulder/s, which is larger than a minimum transverse width of the front portion, the minimum transverse width being located rear of the shoulder transverse width.

The shoulder transverse width may be at least 2 mm larger, preferably at least 5 mm larger, more preferably at least 8 mm larger than the minimum transverse width.

The minimum transverse width of the front portion may be larger than a distance between the pair of seat rails, preferably at least 1 mm larger, more preferably at least 2 mm larger. The distance between the seat rails is typically quite standardized and lies between 35 mm and 37 mm. Thus the minimum transverse width of the front portion may e.g. be in the range of from 38 mm to 40 mm. The suitable width may vary dependent on the resilient properties of the material, e.g. how easy it is to bend or fold, and how it engages with the support system.

As an alternative, or a complement, to being held by lateral tension, the front portion may be held in place by the above-mentioned engaging means. It would then be possible to have the minimum transverse width equal to or less than the distance between the seat rails, since the engaging means will provide engagement with the support system in front of the seat post.

The first fold line may be located in front of the shoulder transverse width by a distance in the range of from 0 to 10 mm, preferably in the range of from 1 to 5 mm, more preferably in the range of from 2 to 4 mm. Thereby, it is ascertained that the tip portion is folded in front of the shoulders. The distance is taken from the location of the shoulder transverse width to the points where the first fold line meets the lateral edges of the front portion.

The tip portion may be adapted to form an angle with the rest of the front portion, when the splash guard is mounted in the seat arrangement, the angle being in the range of from 60° to 120°, preferably from 70° to 110°, more preferably from 80° to 100°. This angle helps to form the desired three-dimensional hook-like shape when attaching the splash guard to the seat arrangement.

The central portion may comprises a widening, e.g. comprising at least one protrusion, the widening being adapted to be held in tension in the transverse direction between the pair of seat rails behind the seat post, when the splash guard is mounted in the seat arrangement. The widening has a larger maximum transverse width than the maximum transverse width of the front portion.

The widening may comprise at least one protrusion at the lateral edge of the splash guard, preferably a first protrusion at one lateral side of the central portion and a second protrusion at the opposite lateral side of the central portion. The protrusion/s is/are adapted to press against one of the seat rails behind the seat post, when the splash guard is mounted in the seat arrangement.

The widening is useful when adapting the splash guard to different models of seat arrangements, where the configuration of the seat rails, e.g. their transverse distance, may vary from one model to another.

The splash guard may comprise, or be made of, a resilient material and be shaped such that the splash guard forms a three-dimensional shape, when the central portion is held in tension in the transverse direction.

Examples of suitable resilient materials are plastic, cardboard or metal foil, i.e. it is possible to bend and/or fold the material to obtain the desired three-dimensional shape of the splash guard when mounted in the seat arrangement. By utilizing such materials, the splash guard may further be given a low weight. No extra attachment means are needed, such as screws, clips or nuts and bolts, which would add to the weight, and which would also be easy too loose, since the splash guard is kept in place due to the resiliency of the material.

The splash guard may be shaped such that it forms a three-dimensional shape, when the central portion is held in tension in the transverse direction, e.g. by the support system of the seat arrangement, e.g. held in tension between the seat rails behind the seat post.

The splash guard may be substantially flat when untensioned. Being untensioned means that it is not subjected to any external force. It is then in a relaxed state. This makes the splash guard easy to manufacture, store and distribute.

As an alternative, the splash guard may be manufactured such that it has a three-dimensional shape also when untensioned. It may e.g. be injection-moulded or thermo-formed. This shape may be more or less the same shape, as the three-dimensional shape the splash guard is desired to have when mounted in the seat arrangement. Such a shape may have a transverse width which is less than the transverse distance between the seat rails, such that the splash guard will not engage with the seat rails when passing through them in front of the seat post. However, due to the foldable tip portion of the splash guard according to the invention also such a splash guard will be securely attached to the seat arrangement. Further, by folding the tip portion, the transverse width of the front portion when at the passage of the seat rails will be increased when mounted in the seat arrangement, since the lateral edges are pressed outwards due to the upward folding of the tip portion.

In a second aspect of the present invention, there is provided a method for mounting a splash guard as described herein to a seat arrangement of a bicycle. The seat arrangement comprises a seat, a pair of seat rails and a seat post, the seat being connectable to the seat post by means of the seat rails. The splash guard has a longitudinal direction and a transverse direction. The splash guard comprises a front portion, a central portion and a rear portion, the front portion comprising a foldable tip portion. The front portion comprises a first fold line at least partly, preferably completely, delimiting the tip portion from the rest of the front portion, such that the tip portion is located in front of the first fold line, the first fold line being curved in a forward direction.

The method comprises
- bending the central portion in the transverse direction,
- inserting the front portion into the seat arrangement between the pair of seat rails from behind the seat post,
- pushing the splash guard forward in relation to the seat arrangement, such that the front portion moves between the pair of seat rails behind the seat post, below the seat and above the seat post,
- bending the front portion downwards to pass through the pair of seat rails in front of the seat post,
- folding the tip portion upwards towards the pair of seat rails in front of the seat post from below by folding the front portion at the first fold line, such that the first fold line is located below the pair of seat rails.

Preferably the tip portion is folded upwards such that it abuts an underside of the pair of seat rails.

The method is easy and intuitive to perform. It may be performed without the use of any tools. The splash guard is given a stable position relative to the seat arrangement, such that the splash guard will stay in place also when the bicycle is used in rough terrain.

When the splash guard is going to be dismounted from the seat arrangement, the tip portion is first unfolded or straightened out, such that it is directed downwards. Thereby the splash guard is transformed to an unlocked state. Thereafter the splash guard can be pulled out it a rearwards direction until it goes free from the seat rails.

### BRIEF DESCRIPTION OF THE DRAWINGS

The present invention will hereinafter be further explained by means of non-limiting examples with reference to the appended drawings wherein:
- Fig. 1: schematically illustrates a seat arrangement of a bicycle,
- Fig. 2: is a schematic view of a splash guard according to the invention,
- Fig. 3: is a schematic view of a front portion of the splash guard of Fig. 2,
- Fig. 4a: is a schematic side view of the splash guard of Fig. 2, when mounted in the seat arrangement in its unlocked state i.e. with the tip portion folded down,
- Fig. 4b: is a schematic side view of the splash guard of Fig. 2, when mounted in the seat arrangement in its locked state i.e. with the tip portion folded up,
- Fig. 5a: is a schematic view from underneath of the splash guard of Fig. 4a,
- Fig. 5b: is a schematic view from underneath of the splash guard of Fig. 4b,
- Fig. 6a: is a schematic perspective view of the splash guard of Fig. 4a, and
- Fig. 6b: is a schematic perspective view of the splash guard of Fig. 4b.
- Fig. 7: illustrates a method for mounting the splash guard to the seat arrangement.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

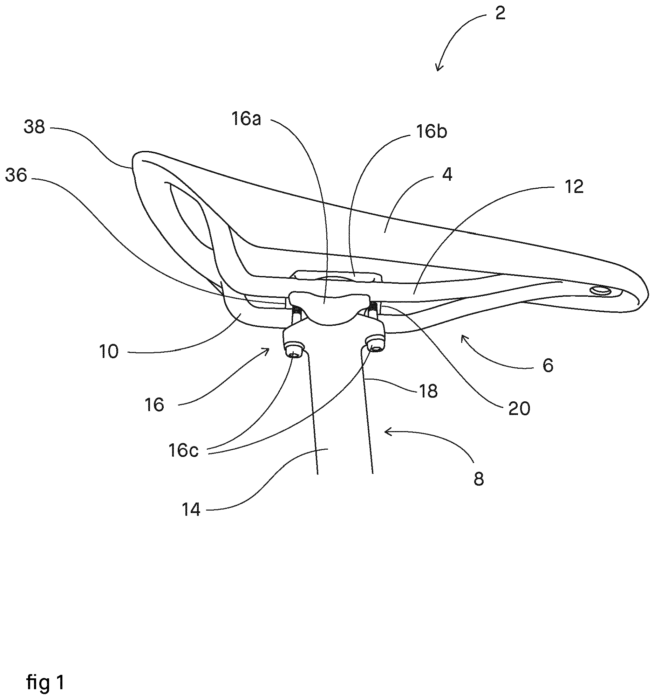

Figure 1 schematically illustrates a typical seat arrangement 2 of a bicycle. The seat arrangement 2 comprises a seat 4, a support system 6 and a seat post 8. The support system 6 comprises a pair of seat rails, in turn comprising a first seat rail 10 at a left-hand side of the seat and a second seat rail 12 at a right-hand side of the seat 4, wherein the left-hand side and right-hand side are defined from the point of view of a possible user sitting on the bicycle would have. The seat post 8 comprises a cylindrical or tubular structure 14 for attachment of the seat arrangement 2 to a frame of the bicycle. The tubular structure 14 may also allow height adjustment of the seat 4 in relation to a frame of the bicycle. The seat post 8 further comprises an attachment unit 16 for attachment of the seat 4 to the seat post 8 via the support system 6, e.g. by attachment of the seat rails 10, 12 to the attachment unit 16. The seat 4 may be adjusted in a longitudinal direction relative to the seat post 8 by selecting which portion of the seat rails 10, 12 is attached to the attachment unit 16. The seat rails 10, 12 may e.g. be slid through the attachment unit 16 in order to reach the desired position. In the illustrated example the attachment unit 16 comprises a lower portion 16a connected to the tubular structure 14 and an upper portion 16b, which is connectable to the lower portion 16a by means of an attachment means, illustrated as a bolt and nut connection 16c. The attachment unit 16 is commonly used in seat arrangements 2 for bicycles and is known to the skilled person. The seat post 8 may additionally comprise one or more additional attachment means, not illustrated, such as a screw or a nut and bolt connection, for connection of other items to the seat post 8. The seat post 8 has a front side 18 facing in a forward direction of the bicycle. In the illustrated example, the tubular structure 14 has a circular cross-section, and the front side 18 is represented by a line along the tubular structure 14. The attachment unit 16 has a front side 20 and a rear side 36.

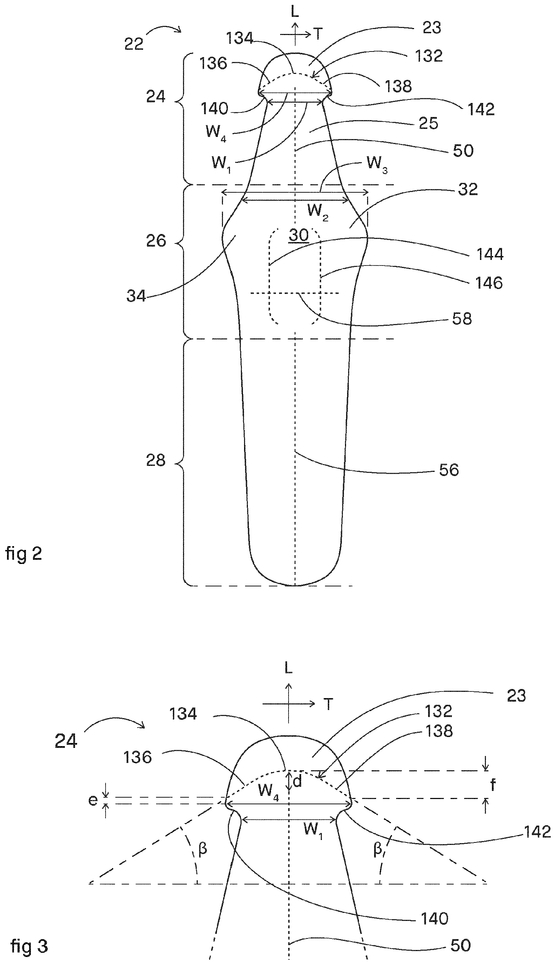

Figure 2 schematically illustrates a splash guard 22 according to the invention. The splash guard 22 is appropriate for use in seat arrangement 2 like the one illustrated in Figure 1. The splash guard 22 has a longitudinal direction L and a transverse direction T. When mounted in the seat arrangement 2 of a bicycle, the longitudinal direction L and the transverse direction T of the splash guard 22 will substantially coincide with the longitudinal and transverse direction of the bicycle. Figure 2 however illustrates the splash guard 22 in an untensioned state. It is then substantially flat.

The splash guard 22 comprises a front portion 24, a central portion 26 and a rear portion 28. A tip portion 23 constitutes a front end of the front portion 24. The splash guard 22 may comprise of, or be made of, a resilient material, e.g. plastic, cardboard or metal foil, i.e. it is possible to bend the material. Further, the splash guard 22 is shaped such that it forms a three-dimensional shape, when the central portion 26, front portion 24 and tip portion 23 is held in tension in the transverse direction T, e.g. by the seat rails 10, 12 of the seat arrangement 2.

The central portion 26 is to be located behind the seat post 8 of the bicycle. The central portion 26 is adapted to extend between the rear side of the seat post 8, here the rear side 36 of the attachment unit 16 comprised in the seat post 8, and a rear end 38 of the seat 4.

The rear portion 28 is adapted to extend in a rearward direction from the seat 4, such that the splash guard 22 is able to catch dirt, mud and/or water thrown up from a rear tyre of the bicycle.

The front portion 24 is adapted to extend over the seat post 8, in particular over the attachment unit 16, when the splash guard 22 is mounted in the seat arrangement 2. A part of the front portion 24 is then located above the seat post 8, in the illustrated example above the attachment unit 16, and above the seat rails 10, 12, but below the seat 4. Further, another part of the front portion 24 is adapted to extend in front of the seat post 8, and to pass through the seat rails 10, 12 and to preferably engage with the seat rails 10, 12 in front of the seat post 8, in particular in front of the attachment unit 16.

The terms front portion 24, central portion 26 and rear portion 28 are related to the positions the splash guard 22 will have when the seat 4 is positioned in an average longitudinal position relative to the seat post 8. As mentioned above, the seat 4 may be adjusted in a longitudinal direction L relative to the seat post 8. Thereby the delimitations of the portions 24, 26, 28 will also be displaced in relation to the rear side of the seat post 8 and the rear end 38 of the seat 4 in a similar way.

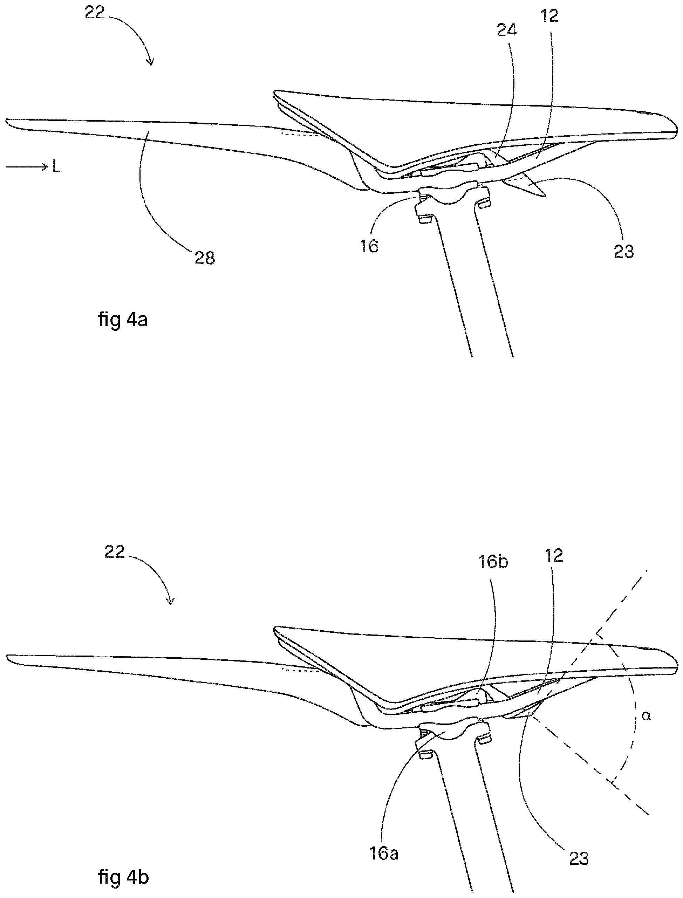

The tip portion 23 is adapted to be folded, from below, upwards towards the seat rails 10, 12 in front of the seat post 8. The tip portion 23 thereby forms a secure attachment with the seat arrangement 2. As is shown in the illustrated embodiment, the tip portion 23 is adapted to be folded upwards until it abuts an underside of the seat rails 10, 12. This is further explained below, in conjunction with Figures 4a, 4b, 5a, 5b, 6a and 6b showing a splash guard 22 when mounted in a seat arrangement 2 of a bicycle.

The front portion 24 has a minimum width w₁, typically located at a location of the front portion 24 where it passes the seat rails 10, 12 in front of the seat post 8. The minimum width w₁ is preferably at least somewhat larger than the transverse distance between the seat rails 10, 12 at the point of engagement, such that the front portion 24 is held in lateral tension, i.e. tensioned in the transverse direction T, when mounted in the seat arrangement 2. The distance between the seat rails 10, 12 is typically quite standardized and lies between 35 mm and 37 mm. Thus the minimum transverse width w₁ of the front portion 24 may e.g. be in the range of from 38 mm to 40 mm. However, even if the width w₁ of the front portion 24 would be less than the transverse distance between the seat rails 10, 12 at the point of engagement in front of the seat post 8, the front portion 24 would be held in place by the folded tip portion 23.

A width w₂ of the central portion 26 where it is adapted to engage with the support system 6 behind the seat post 8 is preferably at least somewhat larger than the transverse distance between the seat rails 10, 12 at the point of engagement behind the seat post 8, such that the central portion 26 is held in lateral tension, when mounted in the seat arrangement 2. Thereby, the central portion 26 obtains a three-dimensional shape influencing the shape of the whole splash guard 122. Since the distance between the seat rails 10, 12 is larger behind the seat post 8 than in front of the seat post 8, or as large, the width w₂ of the central portion 26 is typically larger than the width w₁ of the front portion 24. The suitable width w₂ of the central portion 26 may vary dependent on the resilient properties of the material, e.g. how easy it is to bend or fold the splash guard 22 and how it engages with the support system 6.

The central portion 26 may comprise a widening 30, as is illustrated in Figure 2. The widening 30 has a larger maximum transverse width w₃ than the maximum transverse width of the front portion 24 and the rear portion 28, such that the widening 30 has the largest width of the whole splash guard 22. In the illustrated embodiment, the widening 30 comprises a first protrusion 32 at one lateral side of the central portion 26 and a second protrusion 34 at the opposite lateral side of the central portion 26.

The widening 30 is useful when adapting the splash guard 22 to different models of seat arrangements, where the configuration of the seat rails 10, 12, e.g. their transverse distance, may vary from one model to another.

The front portion 24 comprises engaging means, illustrated as shoulders 140, 142, adapted to engage with the seat rails 10, 12 in front of the seat post 8 close to where the tip portion 23 is to be folded. The front portion 24 has a shoulder transverse width w₄. The width w₄ of the front portion 24 is larger than minimum width w₁ of the front portion 24, thereby forming engaging means 140 and 142 that are adapted to engage with the support system 6, specifically the seat rails 10 and 12. The shoulder transverse width w₄ may be 2 mm larger, preferably at least 5 mm larger, more preferably at least 8 mm larger than the minimum width w₁ of the front portion 24. The shoulder transverse width w₄ is the largest width of the front portion 24 taken in front of the minimum width w₁ of the front portion 24.

Figure 3 schematically illustrates the front portion 24 of the splash guard 2. The front portion 24 comprises the tip portion 23, which is defined by a first fold line 132. Thereby, the tip portion 23 can be folded upwards to obtain an angle α in relation to the rest of the front portion 24, as illustrated in Figures 4a and 4b.

In the illustrated embodiment, the first fold line 132 has the shape of an upside down V with a rounded apex 134, i.e. a first straight section 136 followed by the rounded apex 134 and a second straight section 138. In the illustrated embodiment, the apex 134 has a radius of curvature of about 25 mm and the two straight sections 136, 138 form an angle β of about 32° with a thought line in the transversal direction T. The angle β between the straight sections 136, 138 and the transversal direction T is typically in the range of 10° to 45°, preferably in the range of 20° to 40°.

As an alternative, the first fold line 132 may have an arcuate shape or any other shape giving a curvature in a forward longitudinal direction. However, it is preferred to have a curved shape in order to obtain the desired three-dimensional shape when the splash guard 22 is mounted in the seat arrangement 2. Further, it is preferred to have a first fold line 132 without a sharp tip, since a sharp tip may introduce a point where a fracture would be more likely to start, or it may introduce a local discolouring, e.g. if the splash guard is made of coloured plastics.

In general terms, the curvature of the first fold line could also be described as a function of a longitudinal distance f between the furthermost point of the first fold line 132, here the apex 134, and the points where the first fold line 132 meet the lateral edges of the tip portion 23. A larger radius of apex 134 will result in a larger angle β for a certain longitudinal distance f. The distance f is typically in the range of from 5 mm to 20 mm, preferably in the range of from 8 mm to 15 mm.

As mentioned above, the front portion 24 comprises engaging means 140, 142 intended for engaging the splash guard 122 with the support system 6 of the seat arrangement 2, e.g. by engaging the seat rails 10, 12. In the illustrated embodiment, the engaging means comprises a first shoulder 140 and a second shoulder 142. The first shoulder 140 is adapted to engage with the first seat rail 10 in front of the seat post 8, when the splash guard 122 is mounted in the seat arrangement 2. Similarly, the second shoulder 142 is adapted to engage with the second seat rail 12 in front of the seat post 8. The shoulders 140, 142 help to keep the splash guard 122 in a defined relative position to the seat rails 10, 12, and may help to form a hook-like locked shape of the front portion 24 as the tip portion 23 is in its folded state as illustrated in Figures 4b, 5b and 6b below. For the illustrated embodiment, the minimum width w₁ of the front portion 24 is located just rear of the shoulders 140, 142. Thereby the lateral edge of the splash guard 22 has an almost step-like change at the shoulder 140, 142. Hence, the shoulders 140, 142 are defined by the difference in width between the minimum width w₁ of the front portion 24 and the shoulder transverse width w₄.

As an option, the splash guard may comprise at least one second fold line. In the illustrated embodiment, there are two second fold lines 144, 146 extending in parallel in the longitudinal direction L. Their end portions at both the front and rear ends are curved in a direction towards a longitudinal centre-line of the splash guard 22. This provides the splash guard 22 with a substantially flat upper surface of the central portion 26 when mounted in the seat arrangement 2.

The splash guard 22 comprises a third fold line 50, extending substantially in the longitudinal direction L of the splash guard 22, at least in the front portion 24 thereof, preferably extending along the longitudinal centre-line of the splash guard 22 as is illustrated. The third fold line 50 may extend partly into the central portion 26 as is illustrated. The third fold line 50 may be used to obtain the desired three-dimensional shape of the front portion 24, when mounted in the seat arrangement 2.

A minimum distance d from the front end of the third fold line 50 to the first fold line 132 is typically in the range of from 0 to 25 mm, preferably in the range of from 3 to 20 mm, more preferably in the range of from 5 to 15 mm.

A distance e from the location of the shoulder transverse width w₄, i.e. the largest width of the front portion 24 taken in front of the minimum width w₁ of the front portion 24, to the points where the first fold line 132 meets the lateral edges of the front portion 24 is typically in the range of from 0 to 10 mm, preferably in the range of from 1 to 5 mm, more preferably in the range of from 2 to 4 mm.

The rear portion 28 comprises a fourth fold line 56 extending substantially in the longitudinal direction L of the splash guard 22 here illustrated as extending along the longitudinal centre-line of the splash guard 22 in the rear portion 28 thereof, which is suitable if one fourth fold line 56 is used. If instead using two, three or more fourth fold lines in the rear portion they preferably extend in parallel. The fourth fold line/s may be used to obtain the desired three-dimensional shape of the rear portion 28, when mounted in the seat arrangement 2. The fourth fold line 56 may also result in an increased structural strength of the rear portion 28, e.g. when being hit by mud thrown up by the tyre.

The splash guard 22 also comprises a fifth fold line 58. The fifth fold line 58 is suitably located at about half of the longitudinal length of the splash guard 22. Thereby, the splash guard 22 may be folded double. This may be practical during storage or transporting the splash guard in a bag or in a pocket. The splash guard 22 may then be folded such that the potentially dirty underside is on the inside of the double-fold, such that the outside is relatively clean. The position of the fifth fold line 58 is typically close to the thought line delimiting the central portion 26 from the rear portion 28, and they may even coincide.

The skilled person would understand that any embodiment of the splash guard according to the invention may comprise one or more fourth fold lines 56 and/or fifth fold lines 58.

As an option, the splash guard 22 may comprise a hole, not illustrated, which may be used to hang the splash guard 22 on a rod, e.g. in a shop selling bicycle accessories.

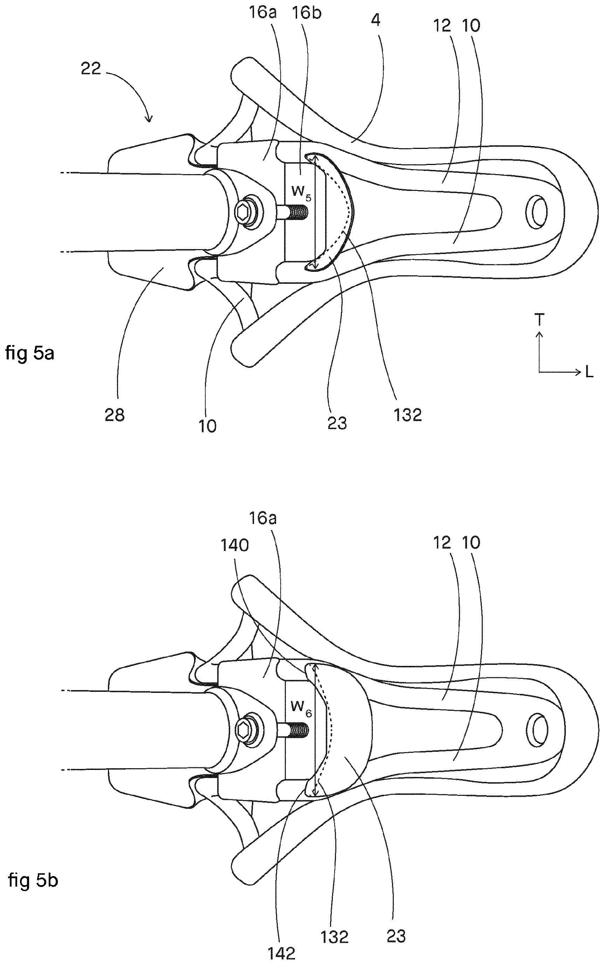

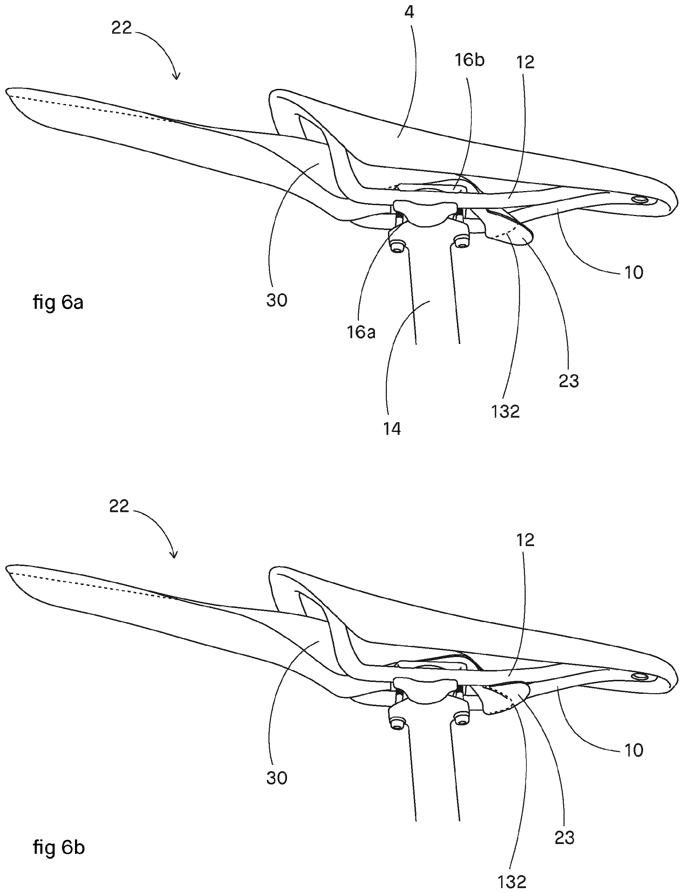

Figures 4a, 5a and 6a illustrate the splash guard 22 of Figure 2, when inserted through the seat rails 10, 12, in an unlocked state i.e. with the tip portion 23 unfolded, in a side view of Figure 4a, an underneath view of Figure 5a and a perspective view of Figure 6a, respectively. In this state, with the tip portion 23 unfolded, the front portion 24 can be bent in the transverse direction T, allowing the tip portion 23 as well as the shoulders 140, 142 of the front portion 24 to pass through the seat rails 10, 12 in front of the attachment unit 16. Before folding the tip portion 23, the front portion 24 has a transverse width w₅ defined as a maximum transverse width of the front portion 24 below the seat rails 10, 12. See Figure 5a. Due to the three-dimensional curvature of the front portion 24, the transverse width w₅ is less than the shoulder transverse width w₄, which is defined with the splash guard 22 in a flat state.

Figures 4b, 5b and 6b illustrate the splash guard 22 of Figure 2, when mounted in the seat arrangement 2, in a locked state i.e. with the tip portion 23 folded upwards, in a side view of Figure 4b, an underneath view of Figure 5b and a perspective view of Figure 6b, respectively. The folding of the tip portion 23 creates a three-dimensional shape of the front portion 24 that locks the splash guard 22 in a pre-definable position, resulting in a secure attachment of the splash guard 22, thereby preventing it from risking falling off due to vibrations, shaking, involuntary interference, or other actions.

After folding the tip portion 23, the front portion 24 has a transverse width w₆ defined as a maximum transverse width of the front portion 24 below the seat rails 10, 12. See Figure 5b. The folding of the tip portion 23 along the curved fold line 132 defines a three-dimensional curvature of the front portion 24, which in turn prevents the shoulders 140, 142 from being able to pass back through the interspace between the seat rails 10 and 12. Due to the folding of the tip portion 23, i.e. in the locked state of the splash guard 22, the transverse width w₆ is larger than the transverse width w₅ of the unlocked state. Cf. Figures 5a and 5b. Moreover, the folding of the tip portion 23, as in Figure 5b, makes it harder to manipulate the front portion 24 by bending it in the transverse direction T.

Typically, a rearward force, e.g. applied at the rear portion 28, acting to pull the splash guard 22 out of the seat arrangement 2 would try to influence the transverse width of the front portion 24 below the seat rails 10, 12 in order to make it smaller to let the shoulders 140, 142 pass through the interspace between the seat rails 10, 12. The force would however, due to the curved nature of the fold defining the tip portion 23, also strive to fold the tip portion 23 even further up towards the undersides of seat rails 10, 12. This results in an equilibrium state of counteracting forces giving the hook-like nature of the front portion 24 in the locked state.

As mentioned above, in the folded state of the splash guard, the tip portion 23 assumes the angle α in relation to the rest of the front portion 24 as seen in a side view, see Figure 4b. The angle α is in the range of from 60° to 120°, preferably from 70° to 110°, more preferably from 80° to 100°. The angle α may be chosen dependent on the shape of the seat rails 10, 12. In the locked state of the illustrated splash guard 22, the tip portion 23 abuts an underside of the seat rails 10, 12.

Further, the folding of the tip portion 23 along the fold line 132 may also provide a visual confirmation that the splash guard 22 is securely mounted and thereby ready for use.

In addition, the folding or unfolding of the tip portion 23 along fold line 132 may also provide an audial confirmation of proper mounting or unmounting by giving of a clicking sound when mounted or unmounted.

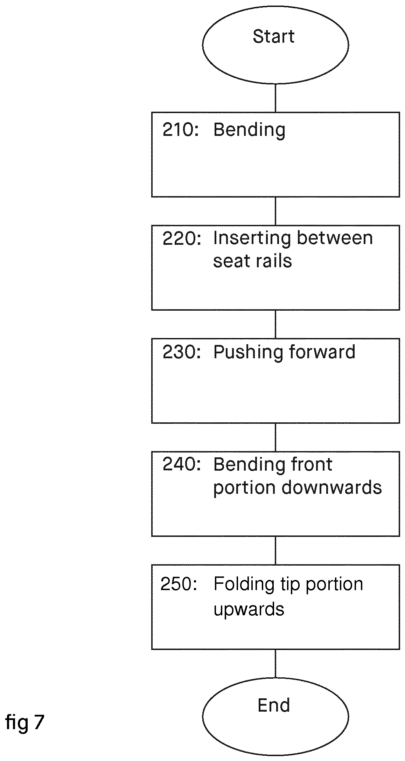

Figure 7 illustrates a method 200 for mounting the splash guard 22 as described herein to the seat arrangement 2. The method comprises
210: bending the central portion in the transverse direction,
220: inserting the front portion into the seat arrangement between the pair of seat rails from behind the seat post,
230: pushing the splash guard forward in relation to the seat arrangement, such that the front portion moves between the pair of seat rails behind the seat post, below the seat and above the seat post,
240: bending the front portion downwards to pass through the pair of seat rails in front of the seat post,
250: folding the tip portion upwards towards the pair of seat rails in front of the seat post from below by folding the front portion at the first fold line, such that the first fold line is located below the pair of seat rails.

Preferably the tip portion is folded upwards such that it abuts an underside of the pair of seat rails.

The method is easy and intuitive to perform. It may be performed without the use of any tools. The splash guard is given a stable position relative to the seat arrangement, such that the splash guard will stay in place also when the bicycle is used in rough terrain.

When the splash guard 22 is going to be dismounted from the seat arrangement 2, the tip portion 23 is first unfolded such that it is directed downwards, see Figures 4a, 5a, 6a. Thereby the splash guard 22 is transformed to the unlocked state. Thereafter the splash guard 22 can be pulled out it a rearwards direction until it goes free from the seat rails.

Further modifications of the invention within the scope of the appended claims are feasible. The seat arrangement 2 of Figure 1 is for example only given as an example. The splash guard according to the invention is thus also applicable for other kinds of seat arrangements.

As such, the present invention should not be considered as limited by the embodiments and figures described herein. Rather, the full scope of the invention should be determined by the appended claims, with reference to the description and drawings.

## Claims

1. A self-supporting rear splash guard (22) for a bicycle, said bicycle having a seat arrangement (2) comprising a seat (4), a pair of seat rails (10, 12) and a seat post (8), said seat (4) being connectable to said seat post (8) by means of said seat rails (10, 12),
said splash guard (22) having a longitudinal direction (L) and a transverse direction (T), said splash guard (22) comprising a front portion (24), a central portion (26) and a rear portion (28),
said splash guard (22) being adapted to extend over said seat post (8), when said splash guard (22) is mounted in said seat arrangement (2),
said front portion (24) of said splash guard (22) being adapted to be bent downwards to pass down through said pair of seat rails (10, 12) and preferably to engage with said pair of seat rails (10, 12) in front of said seat post (8), when said splash guard (22) is mounted in said seat arrangement (2),
**characterized in that**
said front portion (24) of said splash guard (22) comprises a first fold line (132) at least partly, preferably completely, delimiting a tip portion (23) from the rest of said front portion (24), such that said tip portion (23) is located in front of said first fold line (132), said first fold line (132) being curved in a forward direction, preferably having a shape of a V with a rounded apex (134) or an arcuate shape,
said tip portion (23) being adapted to be folded at said first fold line (132) from below upwards towards said pair of seat rails (10, 12) in front of said seat post (8), when said splash guard (22) is mounted in said seat arrangement (2).

2. The splash guard (22) according to claim 1, wherein said tip portion (23) is adapted to be folded upwards, such that it abuts an underside of said pair of seat rails (10, 12).

3. The splash guard (22) according to claim 1 or 2, wherein a longitudinal distance (f) between the point of said first fold line (132) being most forward and a line through the points where said first fold line (132) meets the lateral edges of said tip portion (23) is in the range of from 5 mm to 20 mm, preferably in the range of from 8 mm to 15 mm.

4. The splash guard (22) according to any one of the preceding claims, wherein said splash guard (22) comprises at least one second fold line (144, 146), preferably a pair of second fold lines (144, 146), extending substantially in said longitudinal direction (L) of said splash guard (22) at least in said central portion (26).

5. The splash guard (22) according to any one of the preceding claims, wherein said splash guard (22) further comprises a third fold line (50) extending substantially in said longitudinal direction (L) of said splash guard (22) at least in said front portion (24).

6. The splash guard (22) according to any one of the preceding claims, wherein said front portion (24) of said splash guard (22) comprises at least one engaging means (140, 142) adapted to engage with said pair of seat rails (10, 12) in front of said seat post (8), when said splash guard (22) is mounted in said seat arrangement (2).

7. The splash guard (22) according to claim 6, wherein said engaging means comprises at least one shoulder (140, 142) at a lateral side of said front portion (24) of said splash guard (22), preferably at least one shoulder (140, 142) at each lateral side of said front portion (24), said front portion (24) having a shoulder transverse width (w₄) at a location of said shoulder/s, which is larger than a minimum transverse width (w₁) of said front portion (24), said minimum transverse width (w₁) being located rear of said shoulder transverse width (w₄).

8. The splash guard (22) according to claim 7, wherein said shoulder transverse width (w₄) is at least 2 mm larger, preferably at least 5 mm larger, more preferably at least 8 mm larger than said minimum transverse width (w₁).

9. The splash guard (22) according to claim 7 or 8, wherein said minimum transverse width (w₁) of said front portion (24) is larger than a distance between said pair of seat rails (10, 12), preferably at least 1 mm larger, more preferably at least 2 mm larger.

10. The splash guard (22) according to any one of claims 7-9, wherein said first fold line (132) is located in front of said shoulder transverse width (w₄) by a distance e in the range of from 0 to 10 mm, preferably in the range of from 1 to 5 mm, more preferably in the range of from 2 to 4 mm.

11. The splash guard (22) according to any one of the preceding claims, wherein said tip portion (23) is adapted to form an angle (α) with the rest of said front portion (24), when said splash guard (22) is mounted in said seat arrangement (2), said angle (α) being in the range of from 60° to 120°, preferably from 70° to 110°, more preferably from 80° to 100°.

12. The splash guard (22) according to any one of the preceding claims, wherein said central portion (26) comprises a widening (30), e.g. comprising at least one protrusion (32, 34), said widening (30) being adapted to be held in tension in said transverse direction (T) between said pair of seat rails (10, 12) behind said seat post (8), when said splash guard (22) is mounted in said seat arrangement (2).

13. The splash guard (22) according to any one of the preceding claims, comprising or being made of a resilient material, said splash guard (22) being shaped such that it forms a three-dimensional shape, when said central portion (26) is held in tension in said transverse direction (T).

14. The splash guard (22) according to any one of the preceding claims, wherein said splash guard (22) is substantially flat when untensioned.

15. A method (200) for mounting a splash guard (22) according to any one of the preceding claims to a seat arrangement (2) of a bicycle,
said seat arrangement (2) comprising a seat (4), a pair of seat rails (10, 12) and a seat post (8), said seat (4) being connectable to said seat post (8) by means of said seat rails (10, 12),
said splash guard (22) having a longitudinal direction (L) and a transverse direction (T), said splash guard (22) comprising a front portion (24), a central portion (26) and a rear portion (28), said front portion (24) comprising a tip portion (23) delimited by a first fold line (132),
said method comprising
- bending (210) said central portion (26) in said transverse direction (T),
- inserting (220) said front portion (24) into said seat arrangement (2) between said pair of seat rails (10, 12) from behind said seat post (8),
- pushing (230) said splash guard (22) forward in relation to said seat arrangement (2), such that said front portion (24) moves between said pair of seat rails (10, 12) behind said seat post (8), below said seat (4) and above said seat post (8),
- bending (240) said front portion (24) downwards to pass through said pair of seat rails (10, 12) in front of said seat post (8),
- folding (250) said tip portion (23) upwards towards said pair of seat rails (10, 12) in front of said seat post (8) from below, by folding said front portion (24) at said first fold line (132), such that said first fold line (132) is located below said pair of seat rails (10, 12), preferably folding said tip portion (23) upwards, such that it abuts an underside of said pair of seat rails (10, 12).
